Europäisches Patentamt

(19) European Patent Office

Office européen des brevets

(11) EP 0 496 542 B1

(12) **EUROPEAN PATENT SPECIFICATION**

(45) Date of publication and mention
of the grant of the patent:
**22.07.1998 Bulletin 1998/30**

(51) Int. Cl.$^6$: **B60C 1/00**

(21) Application number: **92300418.8**

(22) Date of filing: **17.01.1992**

(54) **Radial tire**

Radialer Luftreifen

Bandage pneumatique radial

(84) Designated Contracting States:
**DE FR GB**

(30) Priority: **23.01.1991 JP 6270/91**

(43) Date of publication of application:
**29.07.1992 Bulletin 1992/31**

(73) Proprietor:
**SUMITOMO RUBBER INDUSTRIES, LTD.
Hyogo-ken (JP)**

(72) Inventors:
• **Saito, Yuichi
Kobe-shi, Hyogo-ken (JP)**
• **Watanuma, Susumu
Kobe-shi, Hyogo-ken (JP)**

(74) Representative:
**Allard, Susan Joyce et al
BOULT WADE TENNANT,
27 Furnival Street
London EC4A 1PQ (GB)**

(56) References cited:
EP-A- 0 209 125       EP-A- 0 263 885
EP-A- 0 346 147       EP-A- 0 430 617
EP-A- 0 443 762       US-A- 4 748 168

• ENCYCLOPEDIA OF POLYMER SCIENCE AND
ENGINEERING VOL. 2, H.F.MARK ET AL. EDIT.,
US, NEW-YORK, J. WILEY & SONS, 1985,
CARBON APPLICATIONS, PAGE 632 ,F.LYON ET
AL.

**Description**

The present invention relates to a radial tire for passenger cars. Particularly, it relates to a radial tire for passenger cars having an anti-lock braking system.

In a conventional braking system, on a road surface having low friction coefficient, such as an ice surface, the tires on a car lock immediately when the brakes are applied and the car becomes out of control. This is extremely dangerous. An anti-lock braking system (ABS), which has been employed since 1978, is a mechanical or electrical system in which the brakes are loosened as soon as the tires lock. The ABS can safely stop cars under any road conditions without disturbing the car. As described above, the ABS is essentially different from conventional braking systems and, therefore, the development of novel tires which correspond to the latest ABS development have recently been required.

Further, in order to improve the running performance (e.g. braking, driving and turning properties), it is necessary to improve the tire according to a type of car (particularly, the performance of the car), and in addition to improve the tire according to the braking system as described above. For example, it is necessary to develop each tire so that it is suitable for a sports car having a light body and high horsepower, a truck having a lower horsepower regardless of its heavy body respectively. However, in the development of such tires, particularly in the development of the tread rubber which greatly contributes to the properties of the tires, little consideration has been given to satisfying the performance of the car, except for cars which are intended for special use. Actually, in order to balance grip properties, ride comfort and wear resistance some rubbers are mixed to find a compromise point at the sacrifice of the properties of each rubber.

We have already suggested a radial tire having optimum properties which are suitable for the performance of the car (Japanese Kokai Publication 3-239603 corresponding to U.S. Patent Application Serial No. 653,561), but, maximum anti-lock braking property was not achieved.

EP-A-0 443 762 relates to a radial tire suitable for passenger cars and is comprised in the state of the art by virtue of Article 54(3) EPC.

We have now developed a radial tire which shows maximum anti-lock braking properties and has optimum properties which are suitable for the performance of the car.

According to the present invention, there is provided a car or light truck equipped with an anti-lock braking system comprising

a radial tire comprising a tread rubber and side walls, wherein the tread rubber has the following relation between a viscoelasticity (tan $\delta$) peak temperature (Tg) and $\alpha$ value;

$$-50 < Tg < -20 \tag{1}$$

$$10.7\ \alpha - 58 < Tg < 22.9\ \alpha - 48 \tag{2}$$

wherein Tg is obtained from a viscoelasticity (tan $\delta$) temperature distribution curve which is determined using a viscoelastic spectrometer at a frequency of 10 Hz, an initial strain of 10 %, an amplitude of $\pm\, 0.25$ % and a temperature elevating rate of 2 °C/min, and $\alpha$ is obtained from an equation represented by

$$\frac{\text{Engine output x 10}}{\text{Body weight} + 60} \tag{3}$$

wherein the Engine output is a net value in ps unit and the body weight is the weight of an empty car in Kg and wherein the tread rubber does not include either an emulsion polymerized styrene butadiene rubber having a vinyl content in the butadiene portion thereof of 18 wt.% or a solution polymerized styrene butadiene rubber having a vinyl content in the butadiene portion thereof of 35 wt.%.

In the present invention, by using an a value represented by the above equation (3) as the index of the properties of the car, the car is classified. In general, a car which has a high $\alpha$ value is a sports car having a high horsepower and a light body, and a car which has a low $\alpha$ value is a vehicle having a heavy body regardless of horsepower, e.g. an estate car or a light truck.

The viscoelasticity temperature distribution curve used in the present invention may be obtained using a viscoelastic spectrometer (manufactured by Iwamoto Seisakusho K.K.; VES F-III type). The test is carried out at a frequency of 10 Hz, an initial strain of 10 %, an amplitude of $\pm\, 0.25$ % and a rate of increasing temperature of 2 °C/min. Further, Tg indicates the viscoelasticity (tan $\delta$) peak temperature.

In the present invention, Tg should satisfy the above relation according to the $\alpha$ value. If Tg is more than the upper limit of the formula (2), the bracking property of ABS is inferior and, therefore, it is not preferred. If Tg is more than the upper limit of the formula (1), controlling ability over grip limit and riding comfort deteriorate and, therefore, it is not preferred. Further, if Tg is less than the lower limit of the formula (2) or (1), the grip properties of the tire can not follow the

2

horsepower of the car, which results in deterioration of driving and braking properties (under dry condition) and, therefore, it is not preferred.

A method for producing the tread rubber of the present invention is known to persons skilled in the art. However, the adjustment of the above physical properties can be conducted by appropriately selecting rubber components, crosslinking agents, amounts of the crosslinking agents, vulcanizing time and other additives. Examples of the rubber component suitable for the tread rubber of the present invention include styrene butadiene copolymer rubber and high vinyl butadiene rubbers, such as 1,2-butadiene rubber, obtained by solution polymerization, 3,4-isoprene rubber, isoprene butadiene copolymer rubber, natural rubber, isoprene rubber, or a mixture thereof, but exclude an emulsion polymerized styrene butadiene rubber having a vinyl content in the butadiene portion thereof of 18 wt.% or a solution polymerized styrene butadiene rubber having a vinyl content in the butadiene portion thereof of 35 wt.%.

As the reinforcing material of the rubber composition, carbon black is normally used. The carbon black preferably has a particle size of 15 to 35 $\mu$m. When the particle size is less than 15 $\mu$m, the exothermic heat and rolling resistance deteriorate and, therefore, it is not preferred. When the particle size is more than 35 $\mu$m, the wear resistance and grip properties deteriorate.

As described above, the radial tire using the tread rubber of the present invention can show maximum anti-lock braking property in a car equipped with ABS. Further, the radial tire of the present invention is suitable for a car having the properties which are indicated by the $\alpha$ value.

The following Examples and Comparative Examples further illustrate the present invention in detail but are not to be construed as limiting the scope thereof. In the Examples and Comparative Examples, all "parts" and "percents" are by weight unless otherwise stated.

<u>Examples 1 to 3 and Comparative Examples 1 and 2</u>

A tread rubber composition was prepared from the ingredients as shown in Table 1 and then formed into a tire. Side rubbers and the other elements of the tire are common in all tires. The Tg value of the tread rubber is shown in Table 1 and, further, brake index, running stability and riding comfort are evaluated and the results are shown in Table 1. Example 2 is not in accordance with the present invention.

As is clear from Table 1, in a conventional locking brake, the larger the Tg value, the better the results. By using in combination with ABS, the Tg value was improved at the temperature range of -50 to -20 °C. Further, it has been found that there can exist optimum Tg value to the $\alpha$ value of the car and the tread rubber having optimum Tg value is superior in running stability and riding comfort.

Table 1

| Ingredients | Example 1 | Example 2 | Example 3 | Comp. Example 1 | Comp. Example 2 |
|---|---|---|---|---|---|
| Rubber | | | | | |
| NR | 100 | - | - | - | - |
| Oil extended SBR | | 137.5[1] | 137.5[2] | - | 137.5[3] |
| Oil extended high-cis BR | - | - | - | 137.5[4] | _ |
| ISAF carbon | 90 | 90 | 90 | 90 | 90 |
| Aroma oil | 50 | 12.5 | 12.5 | 12.5 | 12.5 |
| Wax | 2 | 2 | 2 | 2 | 2 |
| Antioxidant[5] | 2 | 2 | 2 | 2 | 2 |
| Stearic acid | 2 | 2 | 2 | 2 | 2 |
| Zinc white | 3 | 3 | 3 | 3 | 3 |
| Sulfur | 1.75 | 1.75 | 1.75 | 1.75 | 1.75 |
| Vulcanization accelerator[6] | 1 | 1 | 1 | 1 | 1 |
| Tg ($\tan \delta$ peak temperature, °C) | -47 | -30 | -20 | -76 | -6 |
| Brake index of ABS car[7] | 114 | 110 | 108 | 91 | 100 |
| Brake index of non ABS car[7] | 87 | 92 | 99 | 71 | 100 |
| Total evaluation of running properties and riding comfort[8] | | | | | |
| $\alpha$ = 1.5 (passenger car A) | 2.5 | 3.5 | 4 | 1.5 | 3 |
| $\alpha$ = 1.0 (passenger car B) | 3 | 3.5 | 3 | 2 | 2.5 |
| $\alpha$ = 0.5 (estate car C) | 4 | 3 | 2.5 | 2.5 | 2 |

1) Styrene: 17 %, Vinyl: 35 %, Oil extending amount: 37.5 parts, solution polymerization
2) Styrene: 30 %, Vinyl: 30 %, Oil extending amount: 37.5 parts, solution polymerization
3) Styrene: 35 %, Vinyl: 45 %, Oil extending amount: 37.5 parts, solution polymerization
4) Oil extending amount: 37.5 parts, solution polymerization
5) N,N'-phenyl-p-phenylenediamine
6) N-cyclohexyl-2-benzothiazyl sulfeneamide
7) The speed of a 2,000 cc ABS car or non ABS car equipped with a steel radial tire (size: 195/65R15, inside pressure: 2.0 Kgf/cm$^2$) was reduced from 40 Km/h to 20 Km/h to obtain retardation information. The number in Table 1 are indexes that are calculated on the basis of the tire of Comparative Example 2 being 100. The roads for tests were an asphalt road.
8) Total evaluation of running stability and riding comfort was conducted on a passenger car A ($\alpha$ = 1.5, 225/50R16), passenger car B ($\alpha$ = 1.0, 195/65R15) and an estate car C ($\alpha$ = 0.5, 155R13), respectively. Evaluation was conducted with five grades. The larger the number, the better.

## Claims

1. A car or light truck equipped with an anti-lock brake system comprising a
radial tire comprising a tread rubber, wherein the tread rubber has the following relation between a viscoelasticity ($\tan \delta$) peak temperature (Tg) and $\alpha$ value;

$$-50 < Tg < -20 \qquad (1)$$

$$10.7\,\alpha - 58 < Tg < 22.9\,\alpha - 48 \qquad (2)$$

wherein Tg is obtained from a viscoelasticity (tan $\delta$) temperature distribution curve which is determined using a viscoelastic spectrometer at a frequency of 10 Hz, an initial strain of 10 %, an amplitude of $\pm 0.25$ % and a temperature elevating rate of 2 °C/min, and $\alpha$ is obtained from an equation represented by

$$\frac{\text{Engine output x 10}}{\text{Body weight} + 60} \qquad (3)$$

wherein the Engine output is a net value in ps unit and the body weight is the weight of an empty car in Kg and wherein the tread rubber does not include either an emulsion polymerized styrene butadiene rubber having a vinyl content in the butadiene portion thereof of 18 wt.% or a solution polymerized styrene butadiene rubber having a vinyl content in the butadiene portion thereof of 35 wt.%.

2. A car or light truck as claimed in claim 1, wherein the tread rubber of the radial tire is natural rubber, isoprene rubber, styrene butadiene copolymer rubber, 3,4-isoprene rubber, isoprene butadiene copolymer rubber or 1,2-butadiene rubber, or mixtures thereof.

3. A car or light truck tire as claimed in claim 1 or claim 2 wherein the tread rubber of the radial tire is reinforced with carbon black.

4. A car or light truck tire as claimed in claim 3 wherein the carbon black reinforcing the tread rubber has a particle size in the range of from 15 to 35 $\mu$m.

**Patentansprüche**

1. Fahrzeug oder Kleinlaster, die mit einem Antiblockiersystem ausgerüstet sind, umfassend einen Gürtelreifen, der einen Laufflächengummi umfaßt, wobei der Laufflächengummi die folgende Beziehung zwischen einer Temperaturspitze (Tg) der Viskoelastizität (tan $\delta$) und dem $\alpha$-Wert aufweist:

$$-50 < Tg < -20 \qquad (1)$$

$$10,7\ \alpha - 58 < Tg < 22,9\ \alpha - 48 \qquad (2)$$

wobei

Tg aus einer Temperaturverteilungskurve der Viskoelastizität (tan $\delta$) erhalten wird, die bei einer Frequenz von 10 Hz, einer Anfangsdehnung von 10%, einer Amplitude von $\pm 0,25$% und einer Geschwindigkeit der Temperaturerhöhung von 2°C/min mittels eines Viskoelastizitätsspektrometers bestimmt wird, und $\alpha$ aus der Gleichung

$$\alpha = \frac{\text{Motorleistung} \cdot 10}{\text{Karosseriegewicht} + 60} \qquad (3)$$

erhalten wird, wobei die Motorleistung ein netto-Wert in PS-Einheiten ist, und das Karosseriegewicht das Gewicht eines leeren Fahrzeugs in kg ist, und
wobei der Laufflächengummi weder einen emulsionspolymerisierten Styrol-Butadienkautschuk mit einem Vinylgehalt im Butadienteil von 18 Gew.-% noch einen lösungspolymerisierten Styrol-Butadienkautschuk mit einem Vinylgehalt im Butadienteil von 35 Gew.-% einschließt.

2. Fahrzeug oder Kleinlaster nach Anspruch 1, wobei der Laufflächengummi des Gürtelreifens aus Naturkautschuk, Isoprenkautschuk, Styrol-Butadien-Copolymerkautschuk, 3,4-Isoprenkautschuk, Isopren-Butadien-Copolymerkautschuk oder 1,2-Butadienkautschuk oder deren Gemischen besteht.

3. Reifen für ein Fahrzeug oder einen Kleinlaster nach Anspruch 1 oder 2, in dem der Laufflächengummi des Gürtelreifens mit Ruß verstärkt ist.

4. Reifen für ein Fahrzeug oder einen Kleinlaster nach Anspruch 3, in dem der Ruß zur Verstärkung des Laufflächengummis eine Teilchengröße im Bereich von 15 bis 35 $\mu$m aufweist.

**Revendications**

1. Véhicule automobile ou camionnette équipé d'un système de freinage antiblocage, comprenant :

   un pneumatique à carcasse radiale ayant un caoutchouc de bande de roulement, dans lequel le caoutchouc de la bande de roulement présente la relation suivante entre une température de crête (Tg) de viscoélasticité (tan $\delta$) et une valeur $\alpha$ :

$$-50 < Tg < -20 \tag{1}$$

$$10,7\ \alpha - 58 < Tg < 22,9\ \alpha - 48 \tag{2}$$

   Tg étant obtenu à partir de la courbe de distribution de la viscoélasticité (tan $\delta$) en fonction de la température qui est déterminée à l'aide d'un spectromètre viscoélastique à une fréquence de 10 Hz, avec une déformation initiale de 10 %, une amplitude de $\pm 0,25$ % et une vitesse d'élévation de température de 2 °C/min, et $\alpha$ est obtenu avec l'équation représentée par :

$$(\text{puissance du moteur x 10})/(\text{poids de carrosserie} + 60) \tag{3}$$

   dans lequel la puissance du moteur est une valeur résultante exprimée en unités ps et le poids de la carrosserie est le poids en kilogrammes d'une automobile vide, et le caoutchouc de la bande de roulement ne contient ni caoutchouc de butadiène-styrène polymérisé en émulsion ayant une teneur en vinyle de la partie de butadiène de 18 % en poids, ni du caoutchouc de butadiène-styrène polymérisé en solution ayant une teneur en vinyle de la partie de butadiène de 35 % en poids.

2. Véhicule automobile ou camionnette selon la revendication 1, dans lequel le caoutchouc de la bande de roulement du pneumatique à carcasse radiale est le caoutchouc naturel, le caoutchouc d'isoprène, un caoutchouc de copolymère de butadiène-styrène, le caoutchouc de 3,4-isoprène, un caoutchouc de copolymère de butadiène-isoprène ou un caoutchouc de 1,2-butadiène, ou un de leurs mélanges.

3. Pneumatique de véhicule automobile ou de camionnette selon la revendication 1 ou 2, dans lequel le caoutchouc de la bande de roulement du pneumatique à carcasse radiale est armé de noir de carbone.

4. Pneumatique de véhicule automobile ou de camionnette selon la revendication 3, dans lequel le noir de carbone d'armature du caoutchouc de la bande de roulement a une dimension particulière comprise entre 15 et 35 $\mu$m.